# EUROPÄISCHE PATENTANMELDUNG

(11) **EP 3 872 330 A1**
(43) Veröffentlichungstag der Anmeldung: **01.09.2021**
(21) Anmeldenummer: 21153146.2
(22) Anmeldetag: 25.01.2021
(51) Int. Cl.: F02D 19/08, F02D 19/10, F02D 41/00, F02D 41/14, F02D 35/02, F02D 19/06

(54) **VERFAHREN ZUM BETREIBEN EINES GROSSDIESELMOTORS, SOWIE GROSSDIESELMOTOR**

(30) Priorität: 25.02.2020 EP 20159329
(71) Anmelder: Winterthur Gas & Diesel AG, 8401 Winterthur (CH)
(72) Erfinder: Rozmyslowicz, Bartosz, 8413 Neftenbach (CH); Hanz, Timo, 8320 Fehraltorf (CH)
(74) Vertreter: IPS Irsch AG

(57) **Zusammenfassung**

Es wird ein Verfahren zum Betreiben eines Grossdieselmotors vorgeschlagen, welcher als Dual-Fuel Grossdieselmotor ausgestaltet ist, der in einem Flüssigmodus betreibbar ist, in welchem ein flüssiger Brennstoff zur Verbrennung in einen Zylinder eingebracht wird, und der ferner in einem Gasmodus betreibbar ist, in welchem ein Gas als Brennstoff in den Zylinder eingebracht wird, bei welchem Verfahren aus dem Flüssigmodus in einen Mischmodus gewechselt wird, in welchem dem Zylinder ein Gasanteil des Gases als Brennstoff zugeführt wird, sowie ein Flüssiganteil des flüssigen Brennstoffs zugeführt wird, wobei im Mischmodus ein Kontrollparameter ermittelt wird, der charakteristisch für die Qualität der Verbrennung im Zylinder ist, wobei für den Kontrollparameter ein Grenzwert vorgegeben wird, und wobei der Gasanteil sukzessive erhöht wird, bis der Kontrollparameter den Grenzwert erreicht. Ferner wird ein Grossdieselmotor vorgeschlagen.

## Beschreibung

Die Erfindung betrifft ein Verfahren zum Betreiben eines Grossdieselmotors, welcher als Dual-Fuel Grossdieselmotor ausgestaltet ist, sowie einen Grossdieselmotor gemäss dem Oberbegriff des unabhängigen Patentanspruchs der jeweiligen Kategorie.

Grossdieselmotoren werden klassischerweise mit Schweröl betrieben. Grossdieselmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien. Grossdieselmotoren haben typischerweise Zylinder, deren Innendurchmesser (Bohrung) mindestens 200 mm beträgt. Heutzutage werden Grossdieselmotoren mit einer Bohrung von bis zu 960 mm oder sogar noch mehr eingesetzt.

Unter den Aspekten des wirtschaftlichen und effizienten Betriebs, der Einhaltung von Abgasgrenzwerten und der Verfügbarkeit von Ressourcen sucht man heute auch bei Grossdieselmotoren nach Alternativen zu dem Brennstoff Schweröl. Dabei werden sowohl flüssige Brennstoffe eingesetzt, also Brennstoffe, die im flüssigen Zustand in den Brennraum eingebracht werden, als auch gasförmige Brennstoffe, also Brennstoffe, die im gasförmigen Zustand in den Brennraum eingebracht werden.

Beispiele für flüssige Brennstoffe als bekannte Alternativen zum Schweröl sind andere schwere Kohlenwasserstoffe, die insbesondere als Rückstände bei der Raffinerie von Erdöl übrig bleiben, Alkohole, insbesondere Methanol oder Ethanol, Benzin, Diesel, oder auch Emulsionen oder Suspensionen. So ist es z. B. bekannt, die als MSAR (Multiphase Superfine Atomised Residue) bezeichneten Emulsionen als Brennstoff zu verwenden. Eine bekannte Suspension ist diejenige aus Kohlenstaub und Wasser, die ebenfalls als Brennstoff für Grossmotoren eingesetzt wird. Als gasförmige Brennstoffe sind beispielsweise Erdgase wie LNG (liquefied natural gas), Flüssiggase wie LPG (liquefied petroleum gas) oder Ethan bekannt.

Es sind insbesondere auch solche Grossdieselmotoren bekannt, die mit mindestens zwei verschiedenen Brennstoffen betreibbar sind, wobei der Motor je nach Betriebssituation oder Umgebung entweder mit dem einen Brennstoff oder mit dem anderen Brennstoff betrieben wird.

Ein Beispiel für einen Grossdieselmotor, der mit zwei unterschiedlichen Brennstoffen betreibbar ist, ist ein Grossdieselmotor, der als Dual-Fuel Grossdieselmotor ausgestaltet ist. Dieser ist in einem Flüssigmodus betreibbar, in welchem ein flüssiger Brennstoff zur Verbrennung in den Zylinder eingebracht wird, sowie in einem Gasmodus, in welchem ein Gas als Brennstoff in den Zylinder eingebracht wird.

Grossdieselmotoren, die mit mindestens zwei oder auch mehr verschiedenen flüssigen oder gasförmigen Brennstoffen betrieben werden können, werden häufig, je nach aktuell verwendetem Brennstoff in unterschiedlichen Betriebsmodi betrieben. In dem häufig als Dieselbetrieb bezeichneten Betriebsmodus erfolgt die Verbrennung des Brennstoffs in der Regel nach dem Prinzip der Kompressionszündung oder Selbstzündung des Brennstoffs. In dem häufig als Ottobetrieb bezeichneten Modus erfolgt die Verbrennung durch die Fremdzündung eines zündfähigen vorgemischten Luft-Brennstoff-Gemisches. Diese Fremdzündung kann beispielsweise durch einen elektrischen Funken erfolgen, z. B. mit einer Zündkerze, oder auch durch die Selbstzündung einer kleinen eingespritzten Brennstoffmenge, welche dann die Fremdzündung eines anderen Brennstoffs bewirkt. Häufig wird dabei die für die Selbstzündung vorgesehene kleine Brennstoffmenge in eine mit dem Brennraum verbundene Vorkammer eingespritzt.

Ferner sind auch Mischformen aus dem Ottobetrieb und dem Dieselbetrieb bekannt.

Im Rahmen dieser Anmeldung sind mit dem Begriff "Grossdieselmotor" solche Motoren gemeint, die zumindest in einem Dieselbetrieb betrieben werden können. Insbesondere umfasst der Begriff "Grossdieselmotor" also auch solche Dual-Fuel Grossmotoren, die ausser im Dieselbetrieb auch noch in einem anderen Betrieb, beispielsweise dem Otto-Betrieb, betreibbar sind.

Im Rahmen dieser Anmeldung ist mit dem Begriff "Gasmodus" bzw. "Betrieb im Gasmodus" gemeint, dass nur das Gas bzw. der gasförmige Brennstoff für die drehmomenterzeugende Verbrennung als Brennstoff genutzt werden. Zwar ist es, wie bereits erwähnt, möglich und durchaus auch üblich, dass im Gasmodus für die Fremdzündung des vorgemischten Luft-Brennstoff-Gemisches eine geringe Menge eines selbstzündenden flüssigen Brennstoffs, z. B. Schweröl, eingespritzt wird, um die Fremdzündung auszuführen, aber dennoch wird der Verbrennungsprozess, welcher das Drehmoment erzeugt, vollständig mit dem Gas bzw. mit dem gasförmigen Brennstoff betrieben.

Dieser Vorgang der Fremdzündung durch Selbstzündung einer geringen Menge eines flüssigen Brennstoffs wird manchmal auch als Piloteinspritzung bezeichnet. Diese Piloteinspritzung hat nichts zu tun mit der Einspritzung des flüssigen Brennstoffs in den Brennraum, wenn der Grossmotor im Flüssigmodus betrieben wird. Für die Piloteinspritzung wird üblicherweise, aber nicht notwendigerweise, eine andere Einspritzvorrichtung genutzt als für das Einspritzen des flüssigen Brennstoffs im Flüssigmodus. Häufig wird zudem bei der Piloteinspritzung die geringe Menge des flüssigen Brennstoffs auch nicht direkt in den Brennraum eingespritzt, sondern in mindestens eine Vorkammer, die über einen Kanal mit dem Brennraum verbunden ist.

Insbesondere im Gasmodus ist es im Hinblick auf einen wirtschaftlichen, effizienten und schadstoffarmen Betrieb sehr wichtig, anormale Verbrennungsprozesse zu vermeiden, die insbesondere dann auftreten, wenn das Verhältnis von Spülluft zu Gas, also des Luft-Brennstoff-Verhältnis, nicht in einem bestimmten Bereich liegt.

Ist der Gasanteil zu hoch, so wird das Luft-Brennstoff-Gemisch zu fett. Die Verbrennung des Gemischs erfolgt zu schnell oder zu früh, beispielsweise durch Selbstentzündung, was zum Klopfen des Motors führen kann. Ist der Luftanteil zu hoch, so ist das Luft-Brennstoff-Gemisch zu mager, und es kann zu Zündaussetzern kommen, was natürlich auch negativ im Hinblick auf einen effizienten und schadstoffarmen Betrieb des Motors ist. Insbesondere diese beiden Zustände des zu hohen Gasanteils bzw. des zu hohen Luftanteils werden als anormale Verbrennungsprozesse bezeichnet.

Trägt man für eine vorgegebene Last des Grossdieselmotors das generierte Drehmoment gegen das Luft-Brennstoff-Verhältnis auf, so sind die Grenzen zwischen einer qualitativ hochwertigen Verbrennung und einer anormalen Verbrennung beispielsweise durch zwei Grenzkurven gegeben, nämlich eine Klopfgrenze (knocking limit) und eine Zündaussetzgrenze (misfiring-limit), wobei die qualitativ hochwertige Verbrennung zwischen diesen beiden Grenzkurven liegt. Bei Betriebszuständen, die sich auf der anderen Seite der Klopfgrenze befinden, ist das Luft-Gas-Gemisch zu fett, das heisst es ist zu wenig Luft im Gemisch. Ein zu fettes Gemisch kann zu verschiedenen Problemen führen, nämlich dass die Verbrennung zu schnell abläuft (fast combustion), oder dass der Motor zu klopfen beginnt oder dass das Gemisch im Zylinder dann üblicherweise durch Selbstzündung aufgrund des zu hohen Gehalts an Gas zu früh (bezogen auf den Arbeitszyklus) zu verbrennen beginnt (pre-ignition). Bei Betriebszuständen, die auf der anderen Seite der Zündaussetzgrenze liegen, ist das Luft-Gas-Gemisch zu mager, das heisst es ist nicht genügend Gas für eine optimale Verbrennung im Brennraum vorhanden.

Je nachdem, welches Gas in einem Dual-Fuel Grossdieselmotor als Brennstoff verwendet wird, kann es sehr problematisch, wenn nicht sogar unmöglich werden, den Grossdieselmotor mit einer qualitativ hochwertigen Verbrennung zu betreiben. So sind insbesondere solche Gase kritisch, die eine Methanzahl von weniger als 50 aufweisen, denn sie weisen eine geringe Klopffestigkeit auf und neigen daher zu einer unerwünschten Selbstentzündung.

Ausgehend von diesem Stand der Technik ist es daher eine Aufgabe der Erfindung, ein Verfahren zum Betreiben eines Grossdieselmotors vorzuschlagen, welcher als Dual-Fuel Grossdieselmotor ausgestaltet ist, und der auch mit einem Gas mit geringer Klopffestigkeit mit einer qualitativ hochwertigen Verbrennung betreibbar ist. Ferner ist es eine Aufgabe der Erfindung, einen Grossdieselmotor vorzuschlagen, der mit einem solchen Verfahren betrieben wird..

Die diese Aufgabe lösenden Gegenstände der Erfindung sind durch die Merkmale des unabhängigen Patentanspruchs der jeweiligen Kategorie gekennzeichnet.

Erfindungsgemäss wird also ein Verfahren zum Betreiben eines Grossdieselmotors vorgeschlagen, welcher als Dual-Fuel Grossdieselmotor ausgestaltet ist, der in einem Flüssigmodus betreibbar ist, in welchem ein flüssiger Brennstoff zur Verbrennung in einen Zylinder eingebracht wird, und der ferner in einem Gasmodus betreibbar ist, in welchem ein Gas als Brennstoff in den Zylinder eingebracht wird, bei welchem Verfahren aus dem Flüssigmodus in einen Mischmodus gewechselt wird, in welchem dem Zylinder ein Gasanteil des Gases als Brennstoff zugeführt wird, sowie ein Flüssiganteil des flüssigen Brennstoffs zugeführt wird, wobei im Mischmodus ein Kontrollparameter ermittelt wird, der charakteristisch für die Qualität der Verbrennung im Zylinder ist, wobei für den Kontrollparameter ein Grenzwert vorgegeben wird, und wobei der Gasanteil sukzessive erhöht wird, bis der Kontrollparameter den Grenzwert erreicht.

Bei dem erfindungsgemässen Verfahren wird also von dem Flüssigmodus ausgegangen. In dem Mischmodus wird dem Zylinder dann sowohl das Gas als auch der flüssige Brennstoff als Brennstoff zugeführt. Anhand des Kontrollparameters wird dann die Qualität des Verbrennungsprozesses im Zylinder überwacht, und der Gasanteil wird solange erhöht, bis der Kontrollparameter einen vorgebbaren Grenzwert erreicht. Dieser Grenzwert kann insbesondere anzeigen, dass für den Verbrennungsprozess die Klopfgrenze überschritten wird.

Durch den erfindungsgemässen Mischmodus ist es insbesondere auch möglich, für den Verbrennungsprozess ein Gas zu verwenden, das eine geringe Klopffestigkeit aufweist. So können beispielsweise auch solche Gase verwendet werden, mit denen ein Dual-Fuel Grossdieselmotor im reinen Gasbetrieb gar nicht betrieben werden könnte, ohne dass der Bereich eines hochwertigen Verbrennungsprozesses verlassen wird, weil beispielsweise die Klopffestigkeit des Gases zu gering ist.

Vorzugsweise wird der Flüssiganteil sukzessive verringert. Das heisst, je mehr der Gasanteil erhöht wird, umso mehr wird der Flüssiganteil reduziert.

Besonders bevorzugt wird im Mischmodus der Flüssiganteil minimiert. Das heisst, der Flüssiganteil wird soweit reduziert, dass der Kontrollparameter möglichst nahe an den Grenzwert herankommt, diesen aber nicht überschreitet.

Ferner ist es bevorzugt, dass der Grenzwert in Abhängigkeit von der Last vorgegeben wird, mit welcher der Grossdieselmotor betrieben wird. Wird der Grossdieselmotor beispielsweise mit Volllast, also 100% Last betrieben, so kann für den Kontrollparameter ein Grenzwert vorgegeben werden, der unterschiedlich von dem Grenzwert ist, welcher für einen Teillastbetrieb des Grossdieselmotors vorgegeben wird.

Gemäss einer möglichen Ausführungsform wird der Gasanteil erhöht bis der Grossdieselmotor im Gasmodus betrieben wird. Bei dieser Ausführungsform stellt der Mischmodus also einen Übergang dar, um vom Flüssigmodus in den Gasmodus zu wechseln.

In einer anderen Ausführungsform beträgt der Gasanteil im Mischmodus höchstens 60% oder höchstens 50%. Diese Ausführungsform ist insbesondere für den Betrieb mit solchen Gasen bevorzugt, welche eine geringe Klopffestigkeit, also eine niedrige Methanzahl aufweisen.

So kann das erfindungsgemässe Verfahren insbesondere auch mit einem Gas durchgeführt werden, bei welchem die Methanzahl des Gases höchstens 50 beträgt.

Der Kontrollparameter ist charakteristisch für die Qualität der Verbrennung im Brennraum. Anhand des Kotrollparameters kann insbesondere erkannt werden, ob der Verbrennungsprozess anormal wird, bzw. ob sich der Verbrennungsprozess einer anormalen Verbrennung nähert. Auch ist es möglich, mehr als einen Kontrollparameter zu erfassen.

Besonders bevorzugt wird zumindest einer der folgenden Grössen als Kontrollparameter ermittelt: der Zündsprung, oder der Druckgradient im Brennraum, oder der Zünddruck oder ein Emissionswert.

Als Emissionswert ist insbesondere ein Stickoxidwert als Kontrollparameter geeignet. So kann der NOₓ-Wert in dem Abgas als Kontrollparameter ermittelt werden.

Der Mischmodus hat insbesondere auch den Vorteil, dass insbesondere über den Grenzwert für den Kontrollparameter bzw. über die Grenzwerte der Kontrollparameter, gewählt werden kann, gemäss welcher Abgasnorm der Grossdieselmotor betrieben wird. So kann beispielsweise im Mischmodus über den Gasanteil gewählt werden ob der Grossdieselmotor gemäss der Abgasnorm Tier 2 oder gemäss der Abgasnorm Tier 3 betrieben wird.

Durch die Erfindung wird ferner ein Grossdieselmotor vorgeschlagen, welcher mit einem erfindungsgemässen Verfahren betrieben wird.

Vorzugsweise ist der Grossdieselmotor als längsgespülter Zweitakt-Grossdieselmotor ausgestaltet.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigt:

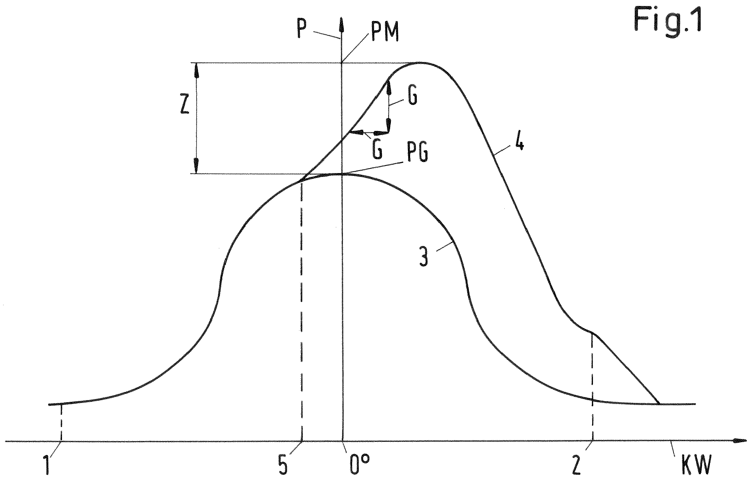

- Fig. 1:: eine Darstellung des Drucks im Zylinder in Abhängigkeit vom Kurbelwinkel.

Mit dem Begriff "Grossdieselmotor" sind solche Motoren gemeint, wie sie üblicherweise als Hauptantriebsaggregate für Schiffe oder auch im stationären Betrieb, z.B. zum Antrieb grosser Generatoren zur Erzeugung elektrischer Energie eingesetzt werden. Typischerweise haben die Zylinder eines Grossdieselmotors jeweils einen Innendurchmesser (Bohrung), der mindestens etwa 200 mm beträgt. Mit dem Begriff "längsgespült" ist gemeint, dass die Spül- oder Ladeluft im Bereich des unteren Endes in den Zylinder eingebracht wird.

Bei der folgenden Beschreibung der Erfindung wird auf einen Grossdieselmotor Bezug genommen, der als Dual-Fuel Grossdieselmotor ausgestaltet ist, also als ein Motor, der mit zwei unterschiedlichen Brennstoffen betrieben werden kann. Im Speziellen kann der Dual-Fuel Gossdieselmotor in einem Flüssigmodus betrieben werden, in welchem nur ein flüssiger Brennstoff in einen Brennraum eines Zylinders eingespritzt wird. Üblicherweise wird der flüssige Brennstoff, beispielsweise Schweröl oder ein Dieselöl, zu einem geeigneten Zeitpunkt direkt in den Brennraum eingespritzt und entzündet sich dort nach dem Diesel-Prinzip der Selbstzündung. Der Grossdieselmotor kann auch in einem Gasmodus betrieben werden, bei dem ein als Brennstoff dienendes Gas, beispielsweise ein Erdgas wie LNG (Liquefied Natural Gas) oder LPG (Liquefied Petroleum Gas) oder Ethan, in Form eines vorgemischten Luft-Brennstoff-Gemisches im Brennraum zur Zündung gebracht wird. Im Speziellen arbeitet der Grossdieselmotor im Gasmodus nach einem Niederdruckverfahren, d.h. das Gas wird im gasförmigen Zustand in den Zylinder eingebracht, wobei der Einspritzdruck des Gases höchstens 50 bar vorzugsweise höchstens 20 bar beträgt. Das Luft-Gas-Gemisch wird im Brennraum nach dem Otto-Prinzip fremdgezündet. Diese Fremdzündung wird üblicherweise dadurch bewirkt, dass zu einem geeigneten Moment eine kleine Menge selbstzündender flüssiger Brennstoff (z. B. Diesel oder Schweröl) in den Brennraum oder in eine Vorkammer eingebracht wird, der sich dann selbst entzündet und dadurch die Fremdzündung des Luft-Brennstoff-Gemisches im Brennraum verursacht.

Wie vorangehend bereits erläutert, ist der Begriff "Gasmodus" bzw. "Betrieb im Gasmodus" im Rahmen dieser Anmeldung so zu verstehen, dass der Grossdieselmotor in diesem Gasmodus nur mit Gas bzw. mit einem gasförmigen Brennstoff betrieben wird, wobei optional eine geringe Menge eines selbstzündenden Brennstoffs, z.B. Schweröl oder Dieselöl, lediglich zur Fremdzündung des Luft-Gas-Gemisches in den Brennraum oder eine Vorkammer oder mehrerer Vorkammern eingebracht wird (Piloteinspritzung).

Bei dem hier beschriebenen Ausführungsbeispiel wird auf einen Grossdieselmotor Bezug genommen, der als längsgespülter Dual-Fuel Zweitakt-Grossdieselmotor ausgestaltet ist.

Der Grossdieselmotor hat mindestens einen, üblicherweise aber eine Mehrzahl von Zylindern. Im Inneren jedes Zylinders ist in an sich bekannter Art ein Kolben entlang einer Zylinderachse zwischen einem oberen Totpunkt und einem unteren Totpunkt hin und her bewegbar angeordnet. Der Kolben ist in an sich bekannter Weise über eine Kolbenstange mit einem Kreuzkopf verbunden, welcher über eine Schubstange mit einer Kurbelwelle verbunden ist, sodass die Bewegung des Kolbens über die Kolbenstange, den Kreuzkopf und die Schubstange auf die Kurbelwelle übertragen wird, um diese zu drehen. Die Oberseite des Kolbens begrenzt gemeinsam mit einem Zylinderdeckel einen Brennraum, in welchen ein Brennstoff für die Verbrennung eingebracht wird.

Im Gasmodus ist dieser Brennstoff ein Gas. Das Gas wird bei einem Niederdruckverfahren beispielsweise durch die zylindrische Wandfläche des jeweiligen Zylinders bzw. durch den Zylinderliner in den Zylinder eingebracht, vorzugsweise etwa in der Mitte zwischen dem oberen und dem unteren Totpunkt des Kolbens. Im Zylinder vermischt sich das Gas bei der Kompressionsbewegung des Kolbens mit der Spülluft und bildet somit ein zündfähiges Luft-Brennstoff-Gemisch, welches dann fremdgezündet wird, wenn sich der Kolben ungefähr im oberen Totpunkt befindet. Die Fremdzündung erfolgt vorzugsweise mittels der Einspritzung eines selbstzündenden Brennstoffs, z.B. Schweröl oder ein Dieselkraftstoff, in eine Vorkammer des jeweiligen Zylinders.

Im Flüssigmodus wird nur ein flüssiger Brennstoff in den Brennraum des Zylinders eingespritzt. Üblicherweise wird der flüssige Brennstoff, beispielsweise Schweröl oder ein Dieselöl, zu einem geeigneten Zeitpunkt direkt in den Brennraum eingespritzt und entzündet sich dort nach dem Diesel-Prinzip der Selbstzündung.

Die Piloteinspritzung, d.h. die Einspritzung des flüssigen Brennstoffs im Gasmodus, die lediglich zur Fremdzündung des Luft-Gas-Gemisches im Brennraum dient, erfolgt vorzugsweise mittels einer oder mehrerer Piloteinspritzdüsen, die verschieden sind von der Haupteinspritzdüse bzw. den Haupteinspritzdüsen, mit der/denen im Flüssigmodus der flüssige Brennstoff in den Brennraum eingespritzt wird.

Der Aufbau und die einzelnen Komponenten eines Grossdieselmotors, wie beispielsweise das Einspritzsystem für den Flüssigmodus, das Gaszuführsystem für den Gasmodus, das Gaswechselsystem, das Abgassystem oder das Turboladersystem für die Bereitstellung der Spül- bzw. Ladeluft, sowie die Kontroll- und Steuerungssystem für einen Grossdieselmotor sind dem Fachmann sowohl für die Ausgestaltung als Zweitaktmotor als auch für die Ausgestaltung als Viertaktmotor hinlänglich bekannt und bedürfen daher hier keiner weiteren Erläuterung.

Bei dem hier beschriebenen Ausführungsbeispiel eines längsgespülten Zweitakt-Grossdieselmotors sind üblicherweise im unteren Bereich eines jeden Zylinders bzw. Zylinderliners Spülluftschlitze vorgesehen, die durch die Bewegung des Kolbens im Zylinder periodisch verschlossen und geöffnet werden, sodass die von dem Turbolader unter einem Ladedruck bereitgestellte Spülluft durch die Spülluftschlitze in den Zylinder einströmen kann, solange diese geöffnet sind. Im Zylinderkopf bzw. im Zylinderdeckel ist ein meistens zentral angeordnetes Auslassventil vorgesehen, durch welches die Verbrennungsgase nach dem Verbrennungsprozess aus dem Zylinder in das Abgassystem ausgetragen werden können. Für das Einbringen des flüssigen Brennstoffs sind die eine oder die mehreren Haupteinspritzdüsen vorgesehen, die beispielsweise im Zylinderkopf in der Nähe des Auslassventils angeordnet sind. Für die Gaszuführung ist ein Gaszuführsystem vorgesehen, das mindestens ein Gaseinlassventil mit einer Gaseinlassdüse umfasst. Die Gaseinlassdüse ist typischerweise in der Wandung des Zylinders vorgesehen, beispielsweise auf einer Höhe, die etwa in der Mitte zwischen dem oberen und dem unteren Totpunkt des Kolbens liegt.

Das Kontroll- und Steuerungssystem ist in modernen Grossdieselmotoren ein elektronisches System, mit welchem sich üblicherweise alle Motor- oder Zylinderfunktionen, insbesondere die Einspritzung (Beginn und Ende der Einspritzung) und die Betätigung des Auslassventils, einstellen oder steuern bzw. regeln lassen.

Erfindungsgemäss kann aus dem Flüssigmodus in einen Mischmodus gewechselt werden, in welchem dem Zylinder als Brennstoff sowohl das Gas als auch der flüssige Brennstoff zugeführt wird, sodass während eines Arbeitszyklus des Zylinders sowohl das Gas als auch der flüssige Brennstoff im Brennraum des Zylinders verbrannt werden.

Im Flüssigmodus wird also dem Brennraum nur der flüssige Brennstoff mittels der Haupteinspritzdüsen zugeführt. Falls Piloteinspritzdüsen vorgesehen sind, so ist es möglich, im Flüssigmodus zusätzlich durch die Piloteinspritzdüsen flüssigen Brennstoff einzubringen. Diese optionale Massnahme dient jedoch hauptsächlich dazu zu vermeiden, dass sich die Piloteinspritzdüsen nicht zusetzen bzw. nicht verstopft werden, denn der maximale Brennstofffluss durch die Piloteinspritzdüsen ist viel zu gering, um damit den Grossdieselmotor im Flüssigmodus zu betreiben.

Im Gasmodus wird der gasförmige Brennstoff durch die Gaseinlassdüse(n) des Gaszuführsystem in den Brennraum des Zylinders eingebracht, und der Grossdieselmotor wird nur mit Gas bzw. mit einem gasförmigen Brennstoff betrieben. Lediglich zur Fremdzündung des Luft-Gas-Gemisch wird eine geringe Menge des flüssigen, selbstzündenden Brennstoffs in den Brennraum eingebracht. In der bevorzugten Ausführungsform, bei welcher die Piloteinspritzdüse(n) vorgesehen ist/sind, sind die Haupteinspritzdüsen für den flüssigen Brennstoff im Gasmodus deaktiviert, d.h. es erfolgt keine Einspritzung durch die Haupteinspritzdüsen. Falls keine separaten Piloteinspritzdüsen vorgesehen sind, kann die Piloteinspritzung zur Fremdzündung des Luft-Gas-Gemisches auch mittels der Haupteinspritzdüse(n) erfolgen. Jedenfalls ist die Menge des für die Piloteinspritzung eingebrachten flüssigen Brennstoffs so gering, dass sie praktisch keinen Beitrag zur drehmomenterzeugenden Verbrennung leistet. Typischerweise ist die Piloteinspritzung so bemessen, dass die Verbrennung des flüssigen Brennstoffs höchstens 5% zu der Energiemenge bzw. dem Energiegehalt beiträgt, die/der bei dem Verbrennungsprozess freigesetzt wird.

Im Mischmodus wird sowohl der gasförmige Brennstoff als auch der flüssige Brennstoff in den Brennraum eingebracht, wobei die Menge des flüssigen Brennstoffs so bemessen ist, dass sie signifikant grösser ist als die Brennstoffmenge, die zur Fremdzündung des Luft-Gas-Gemisches benötigt wird. Sowohl der flüssige Brennstoff als auch der gasförmige Brennstoff tragen signifikant zu der drehmomenterzeugenden Verbrennung bei. Die Verbrennung des flüssigen Brennstoffs trägt zu mehr als 5% zu der Energiemenge bei, welche bei dem Verbrennungsprozess freigesetzt wird. Der Zeitpunkt der Gaseinbringung ist vor dem Zeitpunkt der Einspritzung des flüssigen Brennstoffs. Das Luft-Gas-Gemisch wird weiterhin fremdgezündet, entweder durch eine Piloteinspritzung in die Vorkammer(n) oder durch den selbstzündenden flüssigen Brennstoff, der durch die Haupteinspritzdüsen zu einem geeigneten Zeitpunkt des Arbeitszyklus in den Brennraum eingebracht wird.

Gemäss einer bevorzugten Ausführungsform kann vom Flüssigmodus über den Mischmodus in den Gasmodus übergegangen werden. In einer anderen Ausführungsform wird vom Flüssigmodus in den Mischmodus übergegangen und der Grossdieselmotor dann über einen längeren Zeitraum im Mischmodus betrieben. Anschliessend kann dann der Grossdieselmotor wieder im Flüssigmodus betrieben werden.

Im Mischmodus, in welchem sowohl der gasförmige als auch der flüssige Brennstoff in den Zylinder eingebracht werden, wird dem Zylinder ein Gasanteil des Gases und ein Flüssiganteil des flüssigen Brennstoffs als Brennstoff zugeführt.

Im Mischmodus wird ein Kontrollparameter ermittelt der charakteristisch für die Qualität der Verbrennung im Zylinder ist. Insbesondere lässt sich anhand des Kontrollparameters erkennen, ob der Verbrennungsprozess in einem Betriebsbereich zwischen der Klopfgrenze und der Zündaussetzgrenze liegt. In diesem Bereich ist ein effizienter, wirtschaftlicher und schadstoffarmer Betrieb des Grossdieselmotors möglich. Dies wird als ein qualitativ hochwertiger Verbrennungsprozess bezeichnet. Konkrete Beispiele für den Kontrollparameter werden weiter hinten anhand von Fig. 1 erläutert.

Für den Kontrollparameter wird ein Grenzwert vorgegeben, der nicht überschritten oder je nach Kontrollparameter nicht unterschritten werden soll. Der Grenzwert des Kontrollparameters wird beispielsweise so vorgegeben, dass er auf oder unmittelbar benachbart zur Klopfgrenze liegt. Solange der Kontrollparameter also unterhalb dieses vorgegebenen Grenzwerts liegt, ist gewährleistet, dass das Luft-Brennstoff-Gemisch im Brennraum nicht zu fett ist.

Im Mischmodus wird der Gasanteil sukzessive erhöht bis der Kontrollparameter den Grenzwert erreicht. Dabei kann der Grenzwert auch so vorgegeben werden, dass noch eine gewisse Sicherheitsmarge vorhanden ist, beispielsweise so, dass der Grenzwert nicht auf der Klopfgrenze liegt, sondern etwas beabstandet von der Klopfgrenze.

Der Mischmodus wird aus dem Flüssigmodus heraus eingeleitet, das heisst, falls der Grossdieselmotor im Flüssigmodus betrieben wird, kann der Mischmodus eingeleitet werden.

Zunächst wird der Kontrollparameter ermittelt, um zu gewährleisten, dass dieser einen Wert hat, der den vorgegebenen Grenzwert nicht überschreitet.

Dann wird zusätzlich zu dem flüssigen Brennstoff ein kleiner Gasanteil des Gases als Brennstoff in den Zylinder eingebracht, wobei gleichzeitig der Flüssiganteil des flüssigen Brennstoffs, der in den Zylinder eingebracht wird, reduziert wird. Beispielsweise ist der Gasanteil beim Beginn des Mischmodus höchstens 10%.

Im Prinzip ist wählbar, auf welche Grösse der Gasanteil bezogen wird. Diese Grösse kann beispielsweise der Massenanteil sein, sodass der Gasanteil in Massenprozent angegeben wird. Die Grösse kann auch der Volumenanteil sein, sodass der Gasanteil in Volumenprozent angegeben wird. Ferner ist es möglich, dass die Grösse der Energieanteil des Gases ist.

Anschliessend wird der aktuelle Wert des Kontrollparameters ermittelt und mit dem Grenzwert verglichen. Hat der Kontrollparameter den Grenzwert noch nicht erreicht, so wird der Gasanteil erhöht und der Flüssiganteil wird reduziert. Dieser Vorgang wird solange wiederholt, bis der Kontrollparameter den Grenzwert erreicht. Dann wird der Gasanteil konstant gehalten.

Im weiteren Betrieb wird der Kontrollparameter weiterhin kontinuierlich erfasst. Sollte der Kontrollparameter den Grenzwert überschreiten, so wird der Gasanteil solange reduziert, bis der Kontrollparameter wieder auf oder unter dem Grenzwert liegt. Falls der Kontrollparameter mehr als ein vorgebbarer Toleranzbereich unter dem Grenzwert liegt, so wird der Gasanteil erhöht, bis der Kontrollparameter den Grenzwert wieder erreicht.

Diese kontinuierliche Anpassung des Gasanteils ermöglicht es auch, dass der Verbrennungsprozess auch bei Änderungen in der Gaszusammensetzung oder bei Änderungen in den Umgebungsbedingungen, beispielsweise Änderungen der Luftfeuchtigkeit oder der Lufttemperatur, in einem qualitativ hochwertigen Bereich gehalten werden kann.

Bei der vorangehend beschriebenen Erhöhung des Gasanteils wird der Flüssiganteil entsprechend der Erhöhung des Gasanteils sukzessive erniedrigt. Dabei ist es besonders bevorzugt, im Mischmodus den Flüssiganteil zu minimieren. Das bedeutet, dass im Mischmodus der Gasanteil so lange erhöht wird, bis der Kontrollparameter den Grenzwert erreicht. Idealerweise wird also im Mischbetrieb der Gasanteil so eingestellt, dass der aktuelle Wert des Kontrollparameters gleich dem Grenzwert für den Kontrollparameter ist, bzw. möglichst nahe an diesem Grenzwert liegt.

Eine vorteilhafte Variante besteht darin, dass der Grenzwert in Abhängigkeit von der aktuellen Last vorgegeben wird, mit welcher der Grossdieselmotor betrieben wird. Dazu kann in dem Kontrollsystem des Grossdieselmotors eine Look-Up-Tabelle vorgesehen sein, welche die Grenzwerte für den oder die Kontrollparameter in Abhängigkeit von der Last des Grossdieselmotors enthält.

Je nachdem, welches Gas als Brennstoff für den Grossdieselmotor verwendet wird, kann im Mischmodus der Gasanteil sukzessive bis auf 100% erhöht werden, sodass der Grossdieselmotor dann im Gasmodus betrieben wird, oder der Gasanteil wird nur bis auf einen Maximalwert erhöht, oberhalb dessen der Kotrollparameter den Grenzwert überschreiten würde. Bei der letztgenannten Variante wird der Gasanteil im Mischmodus nicht bis auf 100% erhöht, sondern kann beispielsweise auf höchsten 60% oder höchstens 50% beschränkt werden.

Durch das erfindungsgemässe Verfahren mit dem Mischmodus kann der Grossdieselmotor vorteilhafterweise auch mit solchen Gasen betrieben werden, welche für Dual-Fuel Grossdieselmotoren aus dem Stand der Technik nicht geeignet sind, weil ihre Klopffestigkeit zu gering ist. Dies sind insbesondere solche Gase, die eine Methanzahl von weniger als 50 aufweisen, also beispielsweise Ethan oder Flüssiggase wie LPG (Liquefied Petroleum Gas).

Im Folgenden werden anhand von Fig. 1 einige Beispiels von Kontrollparametern erläutert, welche für das erfindungsgemässe Verfahren geeignet sind.

Fig. 1 zeigt den Druck p im Brennraum des Zylinders in Abhängigkeit vom Kurbelwinkel KW. Bei einem Zweitakt-Grossdieselmotor umfasst ein Arbeitszyklus eines Zylinders einen Kurbelwinkelbereich von 360°. Beim Kurbelwinkel 0° oder 360° befindet sich der Kolben im oberen Totpunkt, bei welchem der Brennraum das minimale Volumen aufweist, und in dessen Nähe die Zündung des Brennstoffs im Brennraum erfolgt. Beim Kurbelwinkel 180° befindet sich der Kolben im unteren Totpunkt, bei welchem der Brennraum sein maximales Volumen hat. Mit dem Bezugszeichen 1 ist in Fig. 1 derjenige Kurbelwinkel bezeichnet, bei welchem das Auslassventil während des Kompressionshubs des Kolbens geschlossen wird, wo also die Kompression im Zylinder beginnt, und mit dem Bezugszeichen 2 ist derjenige Kurbelwinkel bezeichnet, bei welchem nach dem Verbrennungsprozess das Auslassventil während des Expansionshubs des Kolbens geöffnet wird.

Die mit dem Bezugszeichen 3 bezeichnete Kurve gibt den Druckverlauf im Zylinder wieder, falls keine Einspritzung von Brennstoff bzw. keine Verbrennung im Zylinder stattfindet. Die Kurve 3 gibt somit den rein geometrisch bedingten Verlauf des Drucks im Zylinder während des Arbeitszyklus wieder. Die mit dem Bezugszeichen 4 bezeichnete Kurve gibt den Druckverlauf im Zylinder wieder, wenn ein Verbrennungsprozess im Zylinder stattfindet.

Wenn sich der Kolben während eines Arbeitszyklus vom unteren Totpunkt zum oberen Totpunkt bewegt wird bei dem Kurbelwinkel 1 das Auslassventil geschlossen und der Kompressionsprozess beginnt. Beim Kurbelwinkel 5 beginnt der Verbrennungsprozess durch Selbstzündung des flüssigen Brennstoffs oder durch Fremdzündung des Luft-Brennstoff-Gemisches, welches das Gas enthält Der Verlauf der Kurve 4 hängt in dem Bereich, in welchem sich die Kurve 4 von der Kurve 3 unterscheidet, von der Qualität des Verbrennungsprozesses ab. Durch den Verbrennungsprozess steigt der Druck im Zylinder an. Nach Durchlaufen des oberen Totpunkts fällt der Druck während der Expansionsbewegung des Kolbens ab. Dieser Druckabfall verstärkt sich, wenn dann beim Kurbelwinkel 2 das Auslassventil geöffnet wird.

In dem Diagramm in Fig. 1 sind insbesondere die folgenden Parameter veranschaulicht, die charakteristisch für die Qualität des Verbrennungsprozesses im Zylinder sind und sich daher als Kontrollparameter für das erfindungsgemässe Verfahren eignen: der Zündsprung Z (firing ratio), welcher das Verhältnis aus dem maximalen Druck im Zylinder bei einem Verbrennungsprozess, nämlich dem Zünddruck PM, und dem maximalen Druck PG im Zylinder ohne Verbrennungsprozess angibt, also das Verhältnis aus den Maxima der Kurven 4 und 3; der Druckgradient G, welcher angibt wie stark sich der Druck im Zylinder während des Verbrennungsprozesses mit dem Kurbelwinkel KW ändert; und der Zünddruck PM, der den maximalen Druck im Brennraum des Zylinders während des Verbrennungsprozesses angibt. Alle diese Parameter sind insbesondere als Kontrollparameter geeignet, um die Qualität des Verbrennungsprozesses im Zylinder zu beurteilen.

Alternativ oder ergänzend ist es auch möglich einen Emissionswert, also beispielsweise einen Schadstoffwert im Abgas des Grossdieselmotors als Kontrollparameter zu verwenden. Insbesondere ist dabei ein Stickoxidwert geeignet, der angibt, wieviel Sickoxide NOₓ im Abgas des Grossdieselmotors enthalten sind.

Der Mischmodus kann insbesondere auch dazu genutzt werden, um den Emissionsgrad des Grossdieselmotors zu wählen und dadurch den Wirkungsgrad des Grossdieselmotors zu optimieren. So kann beispielsweise der Grenzwert für den Kontrollparameter so vorgegeben werden, dass der Grossdieselmotor die Abgasnorm Tier 2 erfüllt oder der Grenzwert kann so vorgegeben werden, dass der Grossdieselmotor die Abgasnorm Tier 3 erfüllt.

Zudem ist es möglich, dass im Mischmodus der aktuelle Gasanteil dazu verwendet wird, andere Betriebsparameter, wie beispielsweise das Timing für das Öffnen und Schliessen der Auslassventile oder den Einspritzbeginn oder die Einspritzdauer, an den jeweiligen Gasanteil bzw. an den jeweiligen Flüssiganteil anzupassen.

## Patentansprüche

1. Verfahren zum Betreiben eines Grossdieselmotors, welcher als Dual-Fuel Grossdieselmotor ausgestaltet ist, der in einem Flüssigmodus betreibbar ist, in welchem ein flüssiger Brennstoff zur Verbrennung in einen Zylinder eingebracht wird, und der ferner in einem Gasmodus betreibbar ist, in welchem ein Gas als Brennstoff in den Zylinder eingebracht wird, bei welchem Verfahren aus dem Flüssigmodus in einen Mischmodus gewechselt wird, in welchem dem Zylinder ein Gasanteil des Gases als Brennstoff zugeführt wird, sowie ein Flüssiganteil des flüssigen Brennstoffs zugeführt wird, **dadurch gekennzeichnet, dass** im Mischmodus ein Kontrollparameter ermittelt wird, der charakteristisch für die Qualität der Verbrennung im Zylinder ist, wobei für den Kontrollparameter ein Grenzwert vorgegeben wird, und wobei der Gasanteil sukzessive erhöht wird, bis der Kontrollparameter den Grenzwert erreicht.

2. Verfahren nach Anspruch 1, bei welchem der Flüssiganteil sukzessive verringert wird.

3. Verfahren nach einem der vorangehenden Ansprüche, bei welchem im Mischmodus der Flüssiganteil minimiert wird.

4. Verfahren nach einem der vorangehenden Ansprüche, bei welchem der Grenzwert in Abhängigkeit von der Last vorgegeben wird, mit welcher der Grossdieselmotor betrieben wird.

5. Verfahren nach einem der vorangehenden Ansprüche, bei welchem der Gasanteil erhöht wird bis der Grossdieselmotor im Gasmodus betrieben wird.

6. Verfahren nach einem der Ansprüche 1-3, bei welchem der Gasanteil im Mischmodus höchstens 60% beträgt.

7. Verfahren nach einem der Ansprüche 1-3, bei welchem der Gasanteil im Mischmodus höchstens 50% beträgt.

8. Verfahren nach einem der vorangehenden Ansprüche, bei welchem die Methanzahl des Gases höchstens 50 beträgt.

9. Verfahren nach einem der vorangehenden Ansprüche, bei welchem der Zündsprung (Z) als Kontrollparameter ermittelt wird.

10. Verfahren nach einem der vorangehenden Ansprüche, bei welchem der Druckgradient (G) im Brennraum als Kontrollparameter ermittelt wird.

11. Verfahren nach einem der vorangehenden Ansprüche, bei welchem der Zünddruck (PM) als Kontrollparameter ermittelt wird.

12. Verfahren nach einem der vorangehenden Ansprüche, bei welchem ein Emissionswert als Kontrollparameter ermittelt wird.

13. Verfahren nach einem der vorangehenden Ansprüche, bei welchem ein Stickoxidwert als Kontrollparameter ermittelt wird.

14. Grossdieselmotor, **dadurch gekennzeichnet, dass** der Grossdieselmotor mit einem Verfahren gemäss einem der vorangehenden Ansprüche betrieben wird.

15. Grossdieselmotor nach Anspruch 14, ausgestaltet als längsgespülter Zweitakt-Grossdieselmotor.
